(19) Europäisches Patentamt
European Patent Office
Office européen des brevets

(11) EP 2 266 812 A2

(12) EUROPEAN PATENT APPLICATION

(43) Date of publication:
29.12.2010 Bulletin 2010/52

(51) Int Cl.:
*B41M 7/00* (2006.01) *C09D 11/10* (2006.01)

(21) Application number: 10166649.3

(22) Date of filing: 21.06.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(30) Priority: 25.06.2009 JP 2009150893

(71) Applicant: Konica Minolta IJ Technologies, Inc.
Hino-shi
Tokyo 191-8511 (JP)

(72) Inventor: Kondo, Ai
Tokyo 191-8511 (JP)

(74) Representative: Gille Hrabal Struck Neidlein Prop Roos
Bucknerstraße 20
40593 Düsseldorf (DE)

Remarks:
A request for correction of the description has been filed pursuant to Rule 139 EPC. A decision on the request will be taken during the proceedings before the Examining Division (Guidelines for Examination in the EPO, A-V, 3.).

# (54) Image forming method using actinic energy radiation curable ink-jet ink and printed matter obtained thereby

(57) Provided is an actinic radiation curable inkjet ink capable of high sensitivity and high glossy image; and an image forming method utilizing the same. An actinic radiation curable inkjet ink comprising a photo polymerization initiator and a polymerizable monomer, wherein a surface free energy $\gamma_s$ of an ink layer cured by an actinic radiation is in the range of 30 to 50 mJ/m$^2$ and a polar component $\gamma_s^p$ is in the range of 5 to 15 mJ/m$^2$; wherein $\gamma_s^d$, $\gamma_s^p$ and $\gamma_s^h$ each represent a non-polar component, a polar component and a hydrogen bond component of a surface free energy of a solid surface based on Young-Fowkes Equation, provided that the surface free energy is represented by $\gamma_s=\gamma_s^d+\gamma_s^p+\gamma_s^h$.



Printed by Jouve, 75001 PARIS (FR)

## Description

### FIELD OF TECHNOLOGY

The present invention relates to an actinic radiation curable inkjet ink capable of high sensitivity and high glossy image; and an image forming method using the same.

### BACKGROUND

In recent years, an inkjet recording method has been applied in various printing fields such as photography, various types of printing, marking and special printing such as color filters. Particularly, it is also possible to obtain an image comparable to silver salt photography by employing a recording apparatus which ejects and controls minute dots; ink which has been improved in such as a color reproduction region, durability and ejection adaptability, and specialized paper which has been remarkably improved in such as coloring ability of a colorant and surface gloss. Improvement in image quality of an inkjet recording method at present has been achieved only by complete combination of a recording apparatus, ink and specialized paper.

However, an inkjet system requiring specialized paper has a problem of limited application of recording media and cost up of recording medium. Therefore, many attempts of recording by an inkjet method on a medium, on which ink is transferred and which is different from specialized paper, have been made. Specifically, listed are such as a phase transition inkjet method utilizing wax ink which is a solid at room temperature, a solvent type inkjet method utilizing ink primarily comprising a rapid drying organic solvent, and an UV inkjet method employing cross-linking after recording with ultraviolet rays.

Among them, an actinic energy radiation curable inkjet method has come to be paid attention in recent years with respect to low level odor compared to a solvent type inkjet method, rapid drying and recording capability on a recording medium without ink absorption ability, and an ultraviolet curable inkjet ink has been disclosed (example, refer to Japanese Translation of PCT International Application Publication No.2000-504778).

This ink employing a cationic polymerizing compound does not suffer from an oxygen inhibition action;, which has an advantage to cure even by using light source having lower energy radiation (example, refer to Unexamined Japanese Patent Application (hereinafter referred to as JP-A) No. 2002-188025).

In a print method of an inkjet printer, there exists a serial print method in which a recording head is installed in a carriage reciprocating along a guide rail disposed in orthogonal direction to conveyance direction of a recording medium and printing; and a line print method in which a recording head having a recording width of a recording medium is disposed in a direction perpendicular to conveyance direction of the recording medium and recording is done in line unit (for example refer to JP-A No. 2002-144553).

In a serial print method, a head unit and a light source attached thereto can be compact, and an image formation having high resolution can be obtained because image is formed with scanning. On the other hand, a line print method has more advantage in productivity than a serial print method.

In the case of these inkjet methods, especially in the image forming by using an actinic energy radiation curable ink in the serial print method, the image is formed by curing ink via radiation of an actinic energy radiation just after ejecting ink onto the recording medium, and further repeating ejection of ink thereon and radiation cure via irradiation of an actinic energy radiation. Gloss of the image is decided by a shape of dot ejecting onto a recording medium and a shape of a next dot overprinted onto or adjacent of a cured dot

In order to control above shape of dot, a method is proposed in which a surface tension of an ink is arranged. For example, proposed is a method in which a surface tension of an ink is defined in terms of 25 to 35 mN/m (for example, WO1999/029787). However, by simple definition of a surface tension of an ink as above, it is difficult to control gloss especially in a serial print method and insufficient to obtain high glossy image.

Moreover, in an actinic energy radiation curable ink, when a monomer having rapid curing rate is mainly used so as to achieve high sensitivity, there occurs problems such as lowering a flexibility of cured film or unstable ejecting because these monomer often tends to have high crystallization or high viscosity.

### SUMMARY

This invention has been made in view of the above-described problems, and the object is to provide an actinic radiation curable inkjet ink which results in excellent ejection property and high sensitivity, and which is capable to form high glossy and flexible image, and an image forming method utilizing the same and a printed matter obtained thereby.

In view of the foregoing the inventors of the present invention conducted diligent investigations. As a result, the following was discovered, and the present invention was achieved. It was found that a gloss was depended on a surface free energy of a cured ink layer when an ink was ejected onto or nearby a cured ink layer to form an image,

especially by a serial print method and that an ink containing specific polymerizable monomer results in excellent ejection and a high sensitivity and capable of forming flexible cured image.

The first aspect is an actinic radiation curable inkjet ink comprising a photo polymerization initiator and a polymerizable monomer, wherein a surface free energy $\gamma_s$ of an ink layer cured by an actinic radiation is in the range of 30 to 50 mJ/$m^2$ and a polar component $\gamma_s{}^p$ is in the range of 5 to 15 mJ/$m^2$; and wherein a degree of stretching of the cured ink layer which is formed by a printing ratio of 100% on a vinyl chloride substrate is 130% or more, wherein $\gamma_s{}^d$, $\gamma_s{}^p$ and $\gamma_s{}^h$ each represent a non polar component, a polar component and a hydrogen bond component of a surface free energy of a solid surface based on Young-Fowkes Equation, provided that the surface free energy is represented by $\gamma_s=\gamma_s{}^d+\gamma_s{}^p+\gamma_s{}^h$.

The second aspect is the actinic radiation curable inkjet ink comprising a photo polymerization initiator and a polymerizable monomer, wherein a surface tension of the ink is in the range of 30 to 50 mN/m and the polymerizable monomer comprises an alicyclic epoxy compound having a molecular weight of not more than 200 and an alicyclic epoxy compound having a molecular weight in the range of 200 to 1,000.

The third aspect is an image forming method comprising steps of ejecting an actinic radiation curable inkjet ink comprising a photo polymerization initiator and a polymerizable monomer, wherein a surface tension of the ink is in the range of 30 to 50 mN/m onto a recording medium by an inkjet method and after the ejecting, irradiating an actinic radiation from a light source to cure the ink; wherein the actinic radiation is radiated so as to have a surface free energy $\gamma_s$ of the cured ink layer being in the range of 30 to 50 mJ/$m^2$ and a polar component $\gamma_s{}^p$ being in the range of 5 to 15 mJ/$m^2$.

The fourth aspect is a printed matter in which an image is formed by ejecting the actinic radiation curable inkjet ink comprising a photo polymerization initiator and a polymerizable monomer, wherein a surface tension of the ink is in the range of 30 to 50 mN/m onto a recording medium by an inkjet method and after the ejecting, irradiating an actinic radiation from a light source to cure the ink; wherein a surface free energy $\gamma_s$ of the cured ink layer is in the range of 30 to 50 mJ/$m^2$ and a polar component $\gamma_s{}^p$ is in the range of 5 to 15 mJ/$m^2$.

This invention can provide an actinic radiation curable ink which results in excellent ejection, a high sensitivity and capable of forming flexible cured image, and an image forming method employing the ink. Also, this invention can provide an inkjet image exhibiting high gloss and flexibility.

## BRIEF DESCRIPTION OF THE DRAWINGS

FIG.1 is a perspective view showing the constitution of the inkjet recording apparatus of the present embodiment.
FIG. 2 is a schematic plain view showing the carriage which has the recording head and the light radiation device and so on.
FIG. 3 is a schematic cross-sectional view showing the part of carriage including at least the recording head in FIG. 2.

## DESCRIPTION OF THE PREFERRED EMBODIMENT

The inkjet ink of the present invention comprises a photo polymerization initiator and a polymerizable monomer, which is curable by an actinic radiation.

In the embodiment of the invention, preferred is the actinic radiation curable inkjet ink in terms of exhibiting the effects of the present invention, wherein the polymerizable monomer comprises an alicyclic epoxy compound having a molecular weight of less than 200 and an alicyclic epoxy compound having a molecular weight in the range of 200 to 1,000. Further preferred is the actinic radiation curable inkjet ink, wherein a content of the alicyclic epoxy compound having a molecular weight in the range of 200 to 1,000 is 20 % or more by mass based on the total content of the alicyclic epoxy compound contained in the actinic radiation curable inkjet ink.

The actinic radiation curable inkjet ink of the present invention is preferred to comprise a pigment Also it is preferable that the ink of the present invention contains a sensitizer. Further the photo polymerization initiator is preferred to be an acid generator.

The actinic radiation curable inkjet ink can be suitable for use in various image forming methods. Especially, preferred is an image forming method comprising steps of ejecting the actinic radiation curable inkjet ink onto a recording medium by an inkjet method and after the ejecting, radiating to cure by an actinic radiation; wherein an actinic radiation is radiated so as to have a surface free energy $\gamma_s$ of the cured ink layer being in the range of 30 to 50 mJ/$m^2$ and a polar component $\gamma_s{}^p$ being in the range of 5 to 15 mJ/$m^2$. In this case, preferred is the image forming method wherein the inkjet method is a serial scan method. Further preferred is forming an image by using an LED light source. Further preferred is the image forming method, wherein a gloss of 60 degree of an image of 90% printing ratio is 50 or more.

Further, a printed matter can be formed by above image forming method, wherein a surface free energy $\gamma_s$ of the cured ink layer is in the range of 30 to 50 mJ/$m^2$ and a polar component $\gamma_s{}^p$ is in the range of 5 to 15 mJ/$m^2$.

The present invention, the components thereof and embodiments to practice the present invention will now be detailed.

(Actinic radiation curable inkjet ink)

"Actinic radiation curable inkjet ink" according to the present invention is an ink mainly used in an image forming method of an inkjet method and its ink composition starts polymerization reaction and results in curing when the ink is radiated by an actinic radiation,. In the case of using the ink in the image forming method of the inkjet method, after the ink is ejected (jetted) and landed onto a recording medium, the ink composition starts polymerization reaction and results in curing and adhering to the printed medium by radiating an actinic radiation to the ink .

Herein, "actinic radiation (refer to as "actinic energy radiation")" is an ultraviolet ray and a visible ray having wavelength of 180 - 500 nm. Applicable light source include LED (Light Emitting Diode) lamp, low pressure mercury lamps, high pressure mercury lamps, ultra-high pressure mercury lamps, metal halide lamps, chemical lamp, blacklight lamp, mercury-xenon lamp, excimer lamp, short-arc lamp, helium-cadmium laser, argon laser and excimer laser.

(Surface free energy)

"Surface free energy" according to the present invention is a surface free energy calculated via Young - Fowkes equation. Surface free energy of an object to be measured is obtained as a non-polar component, a polar component and a hydrogen bond component

At the surface of solid, energy exists as an attractive force toward inside of a material which corresponds to an intermolecular force. This energy is referred to as "surface free energy", which reflects the intermolecular force.

However, for example, in the case of copper, practically, water cannot completely spread on the surface of copper, even though surface energy of copper is 1,000 mN/m, which is one order or more larger than surface energy of water 72 mN/m. This is because surface energy generally reflects total intermolecular force but only specific intermolecular force can relate to actual wetting. Therefore the intermolecular force has to be considered by separating off to each component.

In the case of image formation by inkjet, it is also effective to consider by separating the intermolecular force of the ink or the surface on which the ink is landed to each component in view of controlling spread of dot diameter on the substrate and on the landed dots.

The intermolecular force is classified broadly into a primary bond component (ion bond, covalent bond, metal bond) and secondary bond component (dispersion force, orientation force, hydrogen bonding strength) and the secondary bond component relates to general wetting phenomenon. From Young- Fowkes equation below, dispersion force is calculated as a non-polar component, orientation force is calculated as a polar component and hydrogen bonding strength is calculated as a hydrogen bond component, respectively each in secondary bond.

$$\gamma_L(1+\cos\theta) = 2\sqrt{\gamma_S^d\gamma_L^d} + 2\sqrt{\gamma_S^p\gamma_L^p} + 2\sqrt{\gamma_S^h\gamma_L^h},$$

wherein

- $\gamma_L$: surface free energy of liquid,
- $\gamma_L{}^d$: surface free energy of solid (non-polar component),
- $\gamma_L{}^p$: surface free energy of solid (polar component),
- $\gamma_L{}^h$: surface free energy of solid(hydrogen bond component),
- $\gamma_s{}^d$: surface free energy of solid (non-polar component),
- $\gamma_s{}^p$: surface free energy of solid (polar component),
- $\gamma_s{}^h$: surface tree energy of solid (hydrogen bond component),
- $\theta$: contact angle

Thus, "Surface free energy" according to the present invention is a surface free energy calculated via Young-Fowkes equation.

For example, evaluation procedure for surface free energy is as follows: an actinic radiation curable inkjet ink is coated onto polyethylene terephthalate substrate by a wire bar and cured by LED light source. A contact angle of the surface of cured layer cured by the LED light source against to pure water, propylene carbonate and n-nonane are evaluated by a contact angle meter. Then a non-polar component, a polar component and a hydrogen bond component are calculated via Young - Fowkes equation as the surface free energy of the object to be measured.

In the present invention, Automatic dynamic contact angle meter DCA-VZ type manufactured by Kyowa Interface Science Co., Ltd. is used as above contact angle meter. After contact angle against to pure water, propylene carbonate and n-nonane are evaluated, surface free energy is divided into three components such as a non-polar component, a polar component and a hydrogen bond component via Surface free energy analyzing system EG-25.

In the present invention, it is necessary that a surface free energy $\gamma_s$ of a cured ink layer is in the range of 30 to 50 mJ/m$^2$ and a polar component $\gamma_s^p$ is in the range of 5 to 15 mJ/m$^2$; more preferably $\gamma_s$ is 30 to 40 mJ/m$^2$ and $\gamma_s^p$ is 5 to 10 mJ/m$^2$.

In the case of $\gamma_s$ being less than 30 mJ/m$^2$, when ink is overprinted or ejected onto adjacent position of the recording medium, ink cannot be leveling, and cured as raised dot, resulting in lowering gloss. In the case of $\gamma_s$ being more than 50 mJ/m$^2$, wettability of an ink to a substrate becomes poor, resulting in whited out

A surface free energy $\gamma_s$ of a cured ink layer is correlated well with a surface tension of an actinic radiation curable inkjet ink. When a surface tension of an actinic radiation curable inkjet ink is around 30 to 50 mN/m, a surface free energy $\gamma_s$ of a cured ink layer becomes 30 to 50 mJ/m$^2$.

When a surface tension of an actinic radiation curable inkjet ink is less than 30 mN/m, a surface free energy $\gamma_s$ of a cured ink layer becomes low, resulting in low gloss because ink cannot be leveling when an ink is overprinted or ejected onto adjacent position of the recording medium.

It is possible to determine surface tension of above actinic radiation curable ink by employing surface tension meter (for example, C BVP-Z produced by Kyowa Interface Science Co., Ltd.) by a platinum plate method as a static surface tension value (mN/m) at 25 ˚C.

A polar component $\gamma_s^p$ of the cured ink layer of 5 to 15 mJ/m$^2$ can be obtained by selecting and combining appropriate polymerizable monomer having a polar group; or adjusting a content of a photo polymerization initiator or a sensitizer described later.

According to the present invention, procedure for controlling the surface tension of the actinic radiation curable inkjet ink being 30 to 50 Nm/m or controlling the surface free energy $\gamma_s$ of the ink layer cured by the actinic radiation being in the range of 30 to 50 mJ/m$^2$ and the polar component $\gamma_s^p$ being in the range of 5 to 15 mJ/m$^2$ is not limited thereto. It is achievable, for example, by arranging species or addition amount of polymerizable compound, surfactant, pigment dispersant, or polymerization initiator, as appropriate.

Especially a selection of a polymerizable compound or a content of a polymerization initiator and a sensitizer has a great influence on a polar component $\gamma_s^p$. Namely a polar component $\gamma_s^p$ is influenced by a polymerizability of the polymerizable compound. For example, when a polymerizability is low and much polymer having low molecular weight is included in cured layer, it results in an non-uniform cured layer surface, lowered orientation force (a polar component $\gamma_s^p$) and lowered gloss due to poor leveling when ink is overprinted or ejected onto adjacent position. In this case, one of measure for the resolution is, for example, to increase a polymerization initiator or to select a polymerizable compound (such as polymer polymerizable compound or polyfunctional polymerizable compound).

In case ofusing a cationic polymerizable compound such as an alicyclic epoxy compound by selecting to compose much of polymerizable compound having low molecular weight, it tends to result in lower polymerization degree of cured layer, lower a polar component $\gamma_s^p$ and lower gloss of an image formed by overprinting ink on same position. Herein, low molecular weight is referred to as a molecular weight less than 200, for example. The amount of composition is preferred to be 20 % or less by mass based on a polymerizable compound.

Further, $\gamma_s^p$ is also influenced by an irradiation condition of an actinic radiation. When a light source of low illuminance is used, an ink dot cannot be wet and spread because that a polymerization cannot fully proceed before a next ink drop is printed and the next ink drop is printed over a state of low $\gamma_s^p$. As an irradiation condition, preferred is to utilize a light source having power which can achieve $\gamma_s^p$ being 5 -15 mJ/m$^2$ in 0.001 - 5 seconds. As an illuminance, preferred is 100-4,000mW/cm$^2$.

Thus, in order to keep a polar component $\gamma_s^p$ in the range of 5 to 15 mJ/m$^2$, it is necessary to cure an ink layer thorougbly. In the case of incomplete curing, a polar component $\gamma_s^p$ becomes low and results in low gloss because ink cannot be leveling when an ink is overprinted or ejected onto adjacent position of a cured ink layer.

From above standpoint, preferred embodiment of the present invention is a surface free energy $\gamma_s$ of a substrate on which an image is formed is in the range of 30 to 50 mJ/m$^2$ and a polar component $\gamma_s^p$ is in the range of 5 to 15 mJ/m$^2$

(Polymerizable monomer)

According to the present invention, a polymerizable monomer preferably comprises an alicyclic epoxy compound having a molecular weight of less than 200 and an alicyclic epoxy compound having a molecular weight in the range of 200 to 1,000.

An alicyclic epoxy compound having a molecular weight in the range of 200 to 1,000 has high curability and can result in forming a cured layer having a highly weather resistance due to forming a highly polymerized cured layer. An alicyclic epoxy compound having a molecular weight of less than 200 has low viscosity, resulting in improving handling,

lowering an ejecting temperature and stabilizing ink ejection, and further, after curing, resulting in allowing flexibility of cured layer due to having not so high polymerization.

In the present invention, the flexibility is represented by a degree of stretching of the cured ink layer. Specifically, when a degree of stretching of the cured ink layer which is formed by a printing ratio of 100% on a vinyl chloride substrate is 130% or more, an image having an excellent flexibility can be obtained due to inhibition of a crack or a peel even if it is used under stretching along with a substrate. When a degree of stretching is less than 130%, an image having an excellent flexibility cannot be obtained, resulting in scratch or break with substrate under stretching after forming an image. The degree of stretching according to the present invention is referred to as a value obtained by the measuring method described later. Herein, a measurement is carried out under a thickness of a cured ink layer of 20 μm or less.

By containing this polymerizable monomer, sufficient curability, surface free energy described above on the cured layer, and further flexibility can be obtained.

An alicyclic epoxy compound having a molecular weight in the range of 200 to 1,000 is preferably a compound containing cyclohexene oxide or cyclopentene oxide which is prepared by epoxidation of a compound having at least one cycloalkane ring such as a cyclohexene or cyclopentene ring by using oxidant such as hydrogen peroxide and peracid. In an alicyclic epoxy compound having a molecular weight in the range of 200 to 1,000, an alicyclic epoxy compound having a molecular weight of 300 - 600 is more preferable.

Specific example of alicyclic epoxy compound having a molecular weight in the range of 200 to 1,000 includes: CELLOXIDE 2021, CELLOXIDE 2021A, CELLOXIDE 2021P and CELLOXIDE 2080 manufactured by Daicel Chemical Industry, Ltd.,, UVR-6105, UVR-6110, UVR-6128, UVR-6100, UVR-6216 and UVR-6000 manufactured by Dow Chemical Co. and so on.

Compounds other than above are listed below.

EP-1

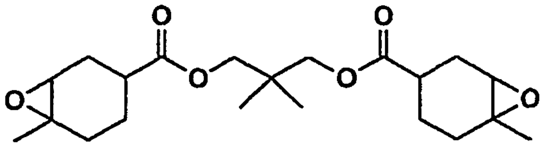

molecular weight: 380.48

EP-2

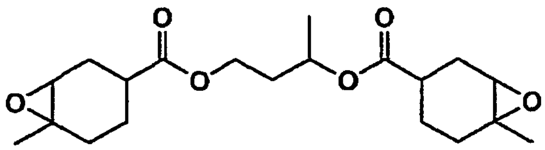

molecular weight: 366.45

EP-3

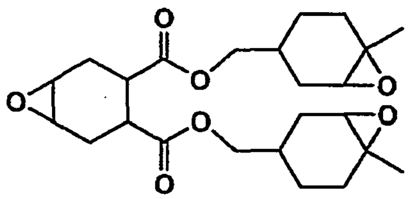

molecular weight: 434.52

EP-4

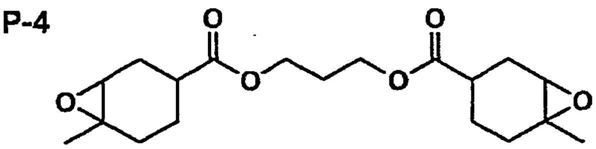

molecular weight: 352.42

EP-5

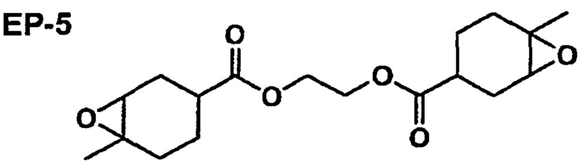

molecular weight: 338.40

EP-6

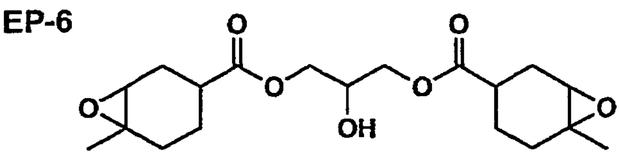

molecular weight: 380.48

EP-7

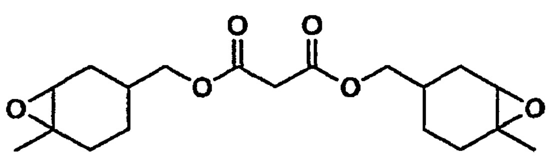

molecular weight: 352.42

EP-8

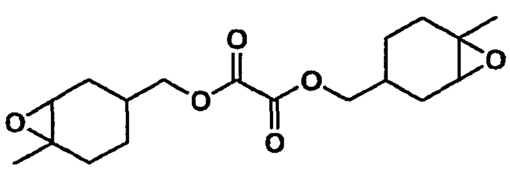

molecular weight: 338.40

EP-9

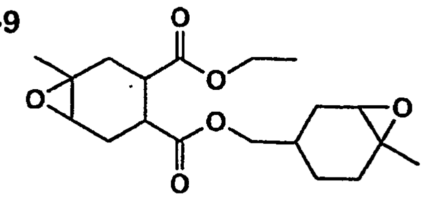

molecular weight: 352.42

EP-10

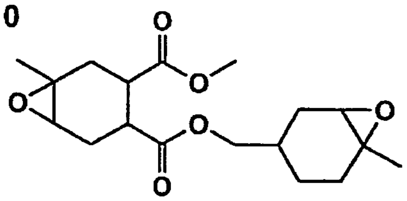

molecular weight: 338.4

EP-11

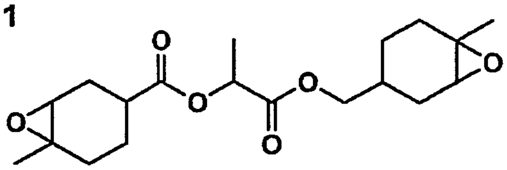

molecular weight: 352.42

The added amount of the alicyclic epoxy compound having a molecular weight in the range of 200 to 1,000 is preferably 10 to 50 % by mass based on total ink. The added amount lower than it tends to result in lowering a curing sensitivity and the added amount higher than it tends to result in increasing viscosity of the ink. Further, in view of a curing sensitivity, the added amount of the alicyclic epoxy compound having a molecular weight in the range of 200 -1,000 is preferably 20 % or more by mass based on total of the alicyclic epoxy compound included in the actinic energy radiation curable inkjet ink, more preferably 30 - 80% by mass.

(Alicyclic epoxy compound having a molecular weight of less than 200)

An alicyclic epoxy compound having a molecular weight of less than 200 includes an epoxy monomer which is used as a reactive dilution solvent Specific example include vinyl cyclohexene monoxide, 1,2-epoxy-4-vinylcyclohexane such as CELLOXIDE 2000 (molecular weight: 124) manufactured by Daicel Chemical Industry, Ltd, 1,2,8,9-diepoxy limonene such as CELLOXIDE 3000 (molecular weight: 192), 3,4-epoxycyclohexyl methylacrylate such as CYCLOMER A400 (molecular weight: 182) and 3,4-epoxycyclohexyl methylinethacrylate such as CYCLOMER M100 (molecular weight: 196). As an alicyclic epoxy compound having a molecular weight of less than 200, preferred is a compound having a molecular weight of from 100 or more to less than 200, more preferably a compound having a molecular weight of from 150 or more to less than 200.

The added amount an alicyclic epoxy compound having a molecular weight of less than 200 is preferably 1 to 30 % by mass. The added amount higher than it tends to result in lowering curing sensitivity.

(Sensitizer)

An ink composition according to the present invention may contain a sensitizer for the purpose of increasing an acid generation efficiency of a photopolymerization initiator and shifting to longer wavelength of sensitive light Preferred is a sensitizer which can sensitize by a charge transfer mechanism or an energy transfer mechanism against a photo polymerization initiator. As a sensitizer, a sensitizing dye is preferred. Sensitizing dye usable to the present invention belongs to a group of compound listed below and has an absorption wavelength at 300 to 450 nm. Preferable example of a sensitizing dye include: polynuclear aromatic hydrocarbons such as phenanthrene, anthracene, pyrene, perylene, triphenylene and 9, 10-dialcoxy anthracene; xanthenes such as flourescein, eosin, erythrosine, rhodamine B and Rose Bengal; thioxanthones such as isopropyl thioxanthone, diethyl thioxanthone, and chloro thioxanthone; cyanines such as thiacarbo cyanine and oxacarbo cyanine; merocyanines such as merocyanine and carbomerocyanine; phthalocianines; thiazines such as thionine, methylene blue and toluidine blue; acridines such as acridine orange, chloroflravin and acryflavin; anthraquinones such as anthraquinone; squaliums such as squalium, coumarins such as 7-diethylamino-4-methy coumarin and ketocoumarin; phenothiadines; phenazine; styrylbenzenes; azo compounds; diphenyl mehane, triphenyl methane, distyrylbenzenes, carbazoles, porphyrin, spiro compounds, quinqeridone, indigo, styryl, pyrylium

compounds, pyrromethene compounds, pyrzolotriazole compounds, benzothiazole compounds, barbituric acid derivatives, thiobarbituric acid derivatives, and further compounds described in European Patent No. 568,993, US Patent Nos. 4,508,811, 5,227,227, JP-A Nos. 2001-125255 and 11-271969.

Especially in the case of using sufonium salt as photopolymerization initiator, preferred is an anthracene derivative having at least one selected from alkoxy group from standpoint of sensitizing efficiency. Further in case that an anthracene derivative tends to precipitate in low temperature circumstance, use of a naphthalene derivative in combination results in excellent sensitizing efficiency while suppressing precipitation of an anthracene derivative.

Specific example include: 9,10-dimethoxyanthracene, 2-ethyl-9,10-dimethoxyanthracene, 2-t-butyl-9,10-dimethoxyanthracene, 2,3-dimethyl-9, 10-dimethoxyanthracene, 9-methoxy-10-methylanthracene, 9,10-diethoxyanthracene, 2-ethyl-9,10-diethoxyanthracene, 2-t-butyl-9,10-diethoxyanthracene, 2,3-dimethyl-9,10-diethoxyanthracene, 9-ethoxy-10-methylanthracene, 9,10-dipropoxyanthracene, 2-ethyl-9,10-dipropoxyanthracene, 2-t-butyl-9,10-dipropoxyanthracene, 2-ethyl-9,10-dibutoxyanthracene, 2-t-butyl-9,10-diebutoxyanthracene, 2-ethyl-9,10-bis(2-ethyl-hexyloxy) anthracene, 2-t-butyl-9,10-bis(2-ethyl-hexyloxy) anthracene, 2,3-dimethyl-9,10-dipropoxyanthracene, 9-isopiopoxy-10-methylanthracene, 9,10-dibenzyloxyanthracene, 2-ethyl-9,10-dibenzyloxyanthracene, 2-t-butyl-9,10-dibenzyloxyanthracene, 2,3-dimethyl-9,10-dibenzyloxyanthracene, 9 benzyloxy-10-methylanthracene, 9,10-di-α-methylbenzyloxyanthracene, 2-ethyl-9,10-di-α-methylbenzyloxyanthracene, 2-t-butyl-9,10-di-α-methylbenzyloxyanthracene, 2,3-dimethyl-9,10-di-α-methylbenzyloxyanthracene, 9-(α-methylbenzyloxy)-10-methylanthracene, 9,10-di(2-hydroxyethoxy)anthracene, or 2-ethyl-9,10-di(2-carboxyethoxy)anthracene, however the present invention is not limited thereto.

As naphthalene derivatives in combination with anthracene derivatives include: 1-naphthol, 2-naphthol, 1-methoxynaphthalene, 1-stearyloxynaphthalene, 2-methoxynaphthalene, 2-dodecyloxynaphthalene, 4-methoxy-1-naphthol, glycidyl-1-naphthyl ether, 2-(2-naphthoxy)ethyl vinyl ether, 1,4-dihydroxynaphthalene, 1,5-dihydroxynaphthalene, 1,6-dihydroxynaphthalene, 2,7-dihydroxynaphthalene, 2,7-dimethoxynaphthalene, 1,1'-thiobis(2-naphthol),1,1'-bi-2-naphthol,1,5-naphthyldiglycidyl ether or 2,7-di(2-vinyloxyethyl)naphthyl ether, however the present invention is not limited thereto.

Further to use an alkoxy anthracene derivatives having high solubility described in JP-A Nos. 2008-255291, 2008-88132 and 2008-169156 can result in increasing sensitivity efficiency due to improving adding amount.

Further in the case of using styrylbenzene derivatives, excellent sensitivity efficiency can be obtained. Specific example of styrylbenzene derivatives are listed below, without being restricted thereto.

SB−1

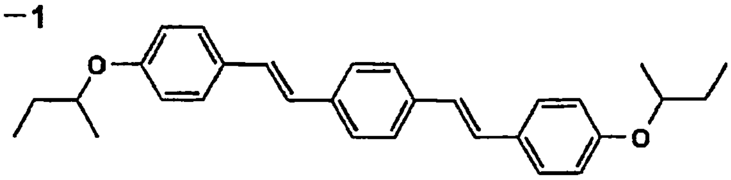

SB−2

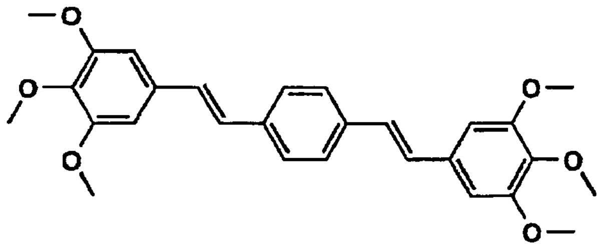

SB−3

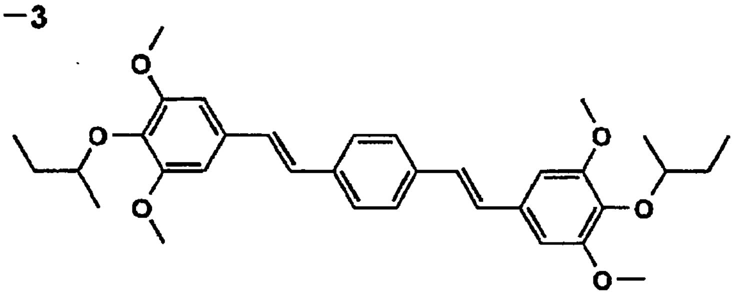

SB−4

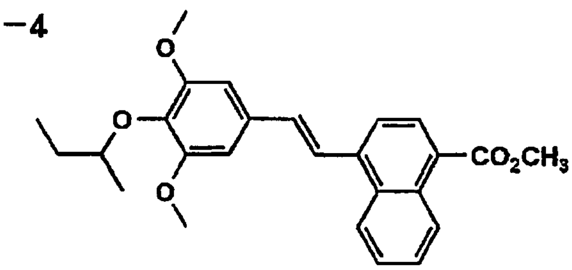

SB−5

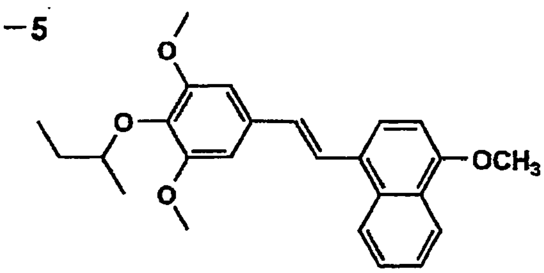

According to the present invention, a polymerizable monomer other than an alicyclic epoxy compound may be contained in an ink. Specific example include a compound having monofunctional glycidyl group such as 2-ethylhexyl glycidyl ether, decanol glycidyl ether, phenyl glycidyl ether and decyl oxilane; monoglycidyl ether or polyglycidyl ether obtained by a reaction between epichlorohydrin and such as ethyleneglycol, diethyleneglycol, triethyleneglycol, tetraethyleneglycol, 1,6-hexane diol, neopentyl glycol, glycerol and polyglycidyl ether, an epoxidized fatty acid ester such as epoxy methyl stearate, epoxy butyl stearate and epoxy octyl stearate; an epoxidized fatty acid glyceride such as epoxidized sybean oil, epoxidized linseed oil and epoxidized castor oil; an oxetane compound disclosed in JP-A No. 2001-220526 and JP-A No. 2001-310937; ethyleneglycol divinyl ether, diethyleneglycol divinyl ether, triethyleneglycol divinyl ether, propyleneglycol divinyl ether, dipropyleneglycol divinyl ether, butanediol divinyl ether, hexanediol divinyl ether,cyclohexanediol divinyl ether, cyclohexanedimethanol divinyl ether and trimethylolpropane trivinyl ether.

(Photo polymerization initiator)

All well-known photo polymerization initiator may be used to an actinic radiation curable inkjet ink of the present invention. Specifically preferred is a photoacid generator.

As such a photoacid generator, any compound used, for example, for chemical sensitization-type photoresists and photo-cationic polymerization is used (refer to pages 187 - 192 of"Imaging Yo Yuki Zairyo (Organic Materials Used for Imaging Applications)" edited by Yuki Electronics Zairyo Kenkyukai published by Bunshin Shuppan (1993). Examples of compounds suitable for the present invention will now be listed.

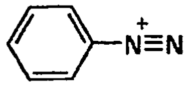

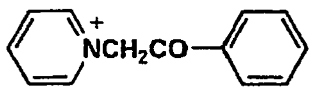

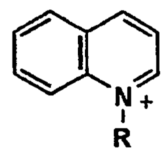

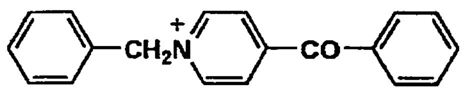

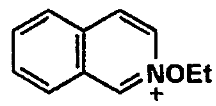

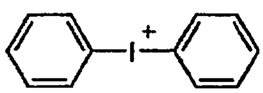

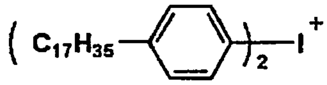

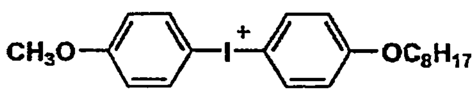

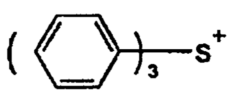

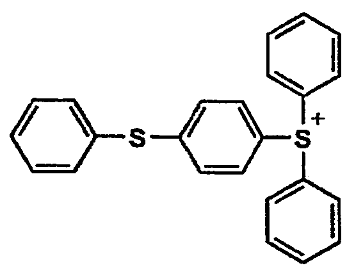

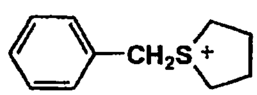

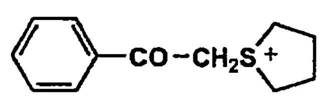

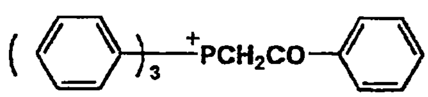

$Ph_3\overset{+}{P}CH_2CN$

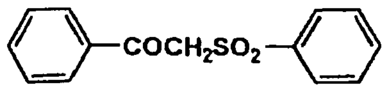
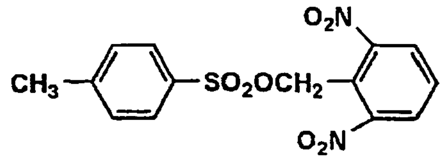

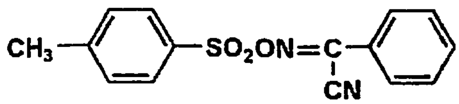
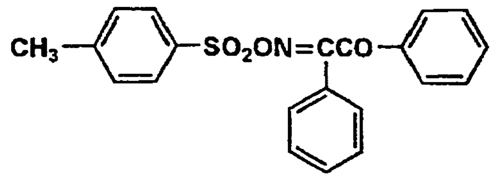

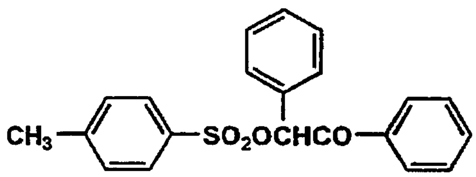
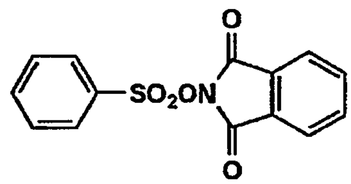

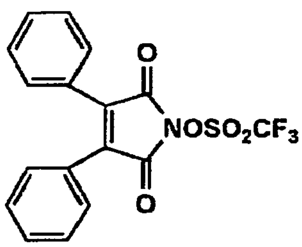

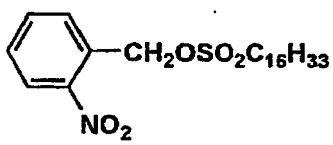
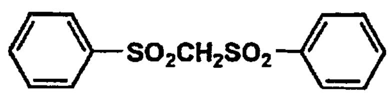

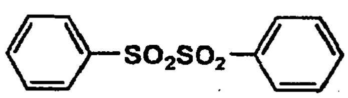
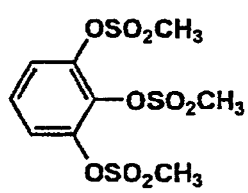

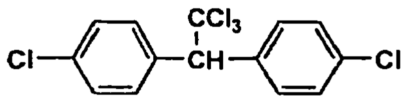

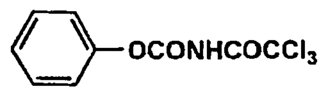

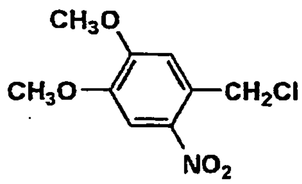

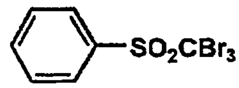

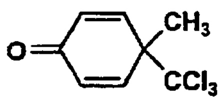

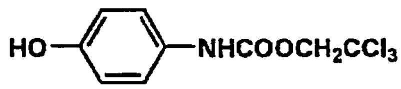

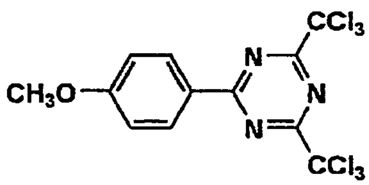

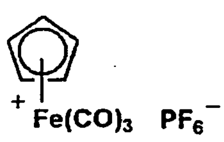

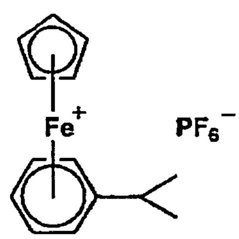

(Basic compound)

According to the invention, it is preferable to incorporate a basic compound together which results in suppressing a generation of wrinkle due to shrinkage by curing even under low temperature as well as improving ejection stability.
As a basic compound, all well-known compounds can be usable. A basic organic compound such as a basic alkali metal compound, a basic alkaline earth metal compound and an amine is listed as a typical example
Above basic alkali metal compound includes hydroxide of alkali metal (such as lithium hydroxide, sodium hydroxide and potassium hydroxide), carbonate of alkali metal (such as lithium carbonate, sodium carbonate and potassium carbonate), alcoholate of alkali metal (such as sodium methoxide, sodium ethoxide, potassium methoxide and potassium ethoxide).
Above basic alkaline earth metal compound similarly includes hydroxide of alkaline earth metal (such as magnesium hydroxide and calcium hydroxide), carbonate of alkaline earth metal (such as magnesium and calcium carbonate), alcoholate of alkaline earth metal (such as magnesium methoxide).
A basic organic compound includes an amine and a nitrogen-containing heterocyclic compound such as quinoline or quinolizine. Among them, amine is preferable with respect to compatibility with photo-polymerizing monomer and listed are such as octylamine, dodecylamine, octadecylamine, naphthylamine, xylenediamine, dibenzylamine, diphenylamine, dibutylamine, dioctylamine, dimethylaniline, quinuclidine, tributylamine, trioctylamine, tetramethylethylenediamine, tetramethyl-1,6-hexamethylenediamine, hexamethylenetetramine, 2-methylaminoethanol, triisopropanolamine and triethanolamine.
The concentration, in the case of a basic compound being present, is preferably in a range of 10 - 1,000 ppm by mass and specifically preferably of 20 - 500 ppm by mass, against the total amount of a photo polymerizable monomer.

Herein, a basic compound may be utilized alone or in combination of plural types.

(Pigment)

An actinic radiation curable inkjet ink of the present invention comprises well-known dye and/or pigment as well as actinic radiation curable compound described above. Preferred is pigment.
Preferred pigment employable to the present invention are exemplified below.

C.L Pigment Yellow 1,3,12,13,14,17,81,83,87,95,109 and 42;
C.I. Pigment Orange 16, 36 and 38;
C.I. Pigment Red 5, 22, 38, 48:1, 48:2, 48:4, 49:1, 53:1, 57:1, 63:1,144,146,185 and 101;
C.I. Pigment Violet 19 and 23;
C.I. Pigment Blue 15:1,15:3,15:4,18, 60, 27 and 29;
C.I. Pigment Green 7 and 36;
C.I. Pigment White 6,18 and 21; and
C.I. Pigment Black 7.

Further, in this invention, white ink is preferably utilized in order to increase a color shielding effect with a transparent substrate such as plastic film. White ink is specifically preferably utilized in soft package printing and label printing. However there is a natural limit to an usable amount due to the stable ejection, curl or wrinkle described before by increasing an amount of ejected ink.
For dispersion of the above-described pigment, various mixing means such as a ball mill, a sand mill, an attritor, a roll mill, an agitator, a Henschel mixer, a colloidal mill, an ultrasonic homogenizer, a pearl mill, a wet jet mill and a paint shaker can be utilized. Further, a dispersant may be also added at the time of dispersion of pigment. As a dispersant, preferably utilized is a polymer dispersant which includes Solsperse series by Avecia Corp. and PB series by Ajinomoto Finetechno Corp. Further, a synergist corresponding to various types of pigment as a dispersion aid can be also utilized. These dispersant and dispersion aid are preferably added at 1 - 50 parts by mass against 100 parts by mass of pigment A solvent or a polymerizable compound is utilized as a dispersion medium, however, as for actinic radiation curable ink utilized in the present invention, solventless is preferred since reaction and curing are performed immediately after ink depositing. When a solvent remains in a cured image, there may cause a problem of deterioration of solvent resistance and a VOC problem of a residual solvent Therefore, a dispersion medium is preferably not a solvent but a polymerizable compound, and monomer having the lowest viscosity among them is more preferably selected with respect to dispersion adaptability.
For dispersion of pigment, it is preferable to make the particle size of pigment particles of 0.08 -0.5 $\mu$m, and selection of pigment, a dispersant and a dispersion medium; dispersion condition, and filtration condition are appropriately set so as to make the maximum particle size of 0.3 -10 $\mu$m and preferably of 03 - 3 $\mu$m. By this particle size control, clogging of a head nozzle is depressed and storage stability, transparency and curing sensitivity of ink can be maintained.
In an actinic radiation curable ink of the present invention, pigment concentration is preferably 1-10 % by mass against the whole ink.

(Other Additives)

In an actinic radiation curable ink of the present invention, various kinds of additives can be added other than the above-described compounds. Examples of an additive include: a surfactant, a leveling additive, a matting agent, a compound to adjust film properties such as a polyester resin, a polyurethane resin, a vinyl resin, an acrylic resin, a rubber resin, and a wax. Further, in order to improve storage stability of the ink, any well known basic compounds may be used. Typical examples of a basic compound include: a basic alkali metal compound, a basic alkali earth metal compound and a basic organic compound such as an amine. Further, radical-cationic hybrid type curable ink may be employable by combining radical polymerizable monomer and initiator.
In an ink of the present invention, a viscosity of the ink is preferably from 7 to 50 mPa·s at 25 ˚C to form an image of high quality with respect to stable ejection and excellent curability regardless of curing ambience (temperature and humidity).
As a recording material utilizable in this invention, various types of non absorptive plastic and film thereof, which are utilized for so-called soft packaging, in addition to ordinary non-coated paper and coated paper, can be utilized; and various types of plastic film includes such as PET film, OPS film, OPP film, ONy film, PVC film, PE film and TAC film. As other plastic film, polycarbonate, acrylic resin, ABS, polyacetal, PVA and rubbers can be utilized. Further, metals and glasses are applicable.
Surface energy of these various types of film significantly differs depending on characteristics of raw materials

and it has been problematic that the dot size may change after ink landing depending on recording materials. In the constitution of this invention, images exhibiting excellent high precision can be formed on recording materials having a wide range of surface energy such as 35 - 60 mJ/m$^2$, including OPP film and OPS film having a low surface energy and PET film having a relatively high surface energy.

In this invention, a recording material of a long length (web) is advantageously utilized with respect to such as cost of a recording material like a packaging expense and a production cost, preparation efficiency of a print and adaptability to prints having various sizes.

(Method for forming image)

The present invention is characterized by an image forming method comprising steps of ejecting the actinic radiation curable inkjet ink which comprises a photo polymerization initiator and a polymerizable monomer by an inkjet method, wherein a surface tension of the ink is in the range of 30 to 50 mN/m and after ejecting, radiating to cure by an actinic radiation from a light source; wherein an actinic radiation is irradiated so as to have a surface free energy $\gamma_s$ of the cured ink layer being in the range of 30 to 50 mJ/m$^2$ and a polar component $\gamma_s{}^p$ being in the range of 5 to 15 mJ/m$^2$.

An illuminance of exposed surface by the actinic radiation is preferred in the range of 100 to 4,000 mW/cm$^2$, more preferably in the range of 150 to 2,000 mW/cm$^2$. In the image forming method according to the present invention, this actinic radiation is preferably irradiated 0.005 to 10 second/cm$^2$, more preferably 0.01 to 0.5 second/cm$^2$.

When the illuminance of exposed surface is lower than 100 mW/cm$^2$, it may be difficult to achieve a surface free energy $\gamma_s$ of the cured ink layer being in the range of 30 to 50 mJ/m$^2$ and a polar component $\gamma_s{}^p$ being in the range of 5 to 15 mJ/m$^2$ within above irradiation time, resulting in having low gloss image. Further, a light source having higher illuminance of exposed surface is undesirable in view of an environment and cost because it needs higher electric power consumption and has large apparatus size.

Further, in the image forming method according to the present invention, heating a substrate is preferred because it helps to shorten an irradiation time to have a surface free energy $\gamma_s$ of the cured ink layer being in the range of 30 to 50 mJ/m$^2$ and a polar component $\gamma_s{}^p$ being in the range of 5 to 15 mJ/m$^2$.

As an actinic energy radiation source, mercury lamps, gas or solid laser is employed. As a light source for curing an ultraviolet ray curable inkjet ink, mercury lamps and halide lamps are well-known employed. However, in view of environmental protection, free from mercury is strongly desired. It is extremely useful to replace it to GaN based semiconductor ultraviolet emission device, in view of industrial and environmental stand point. Further, LED (UV-LED), LD (UV-LD) is expected as a light source for photo-curable inkjet because of its compactness, enhaunced life and efficiency, and low cost. Moreover, light-emitting diode (LED) and laser diode (LD) are also usable as a light source of an actinic energy radiation. Specifically, in the case of needing an ultraviolet ray source, ultraviolet LED and ultraviolet LD can be available. For example, Nichia Corporation manufactures an ultraviolet LED having a wavelength of a main photoemission spectrum between 365 nm and 420 nm. Preferable light source of an actinic energy radiation of the present invention is UV-LED, more preferably UV-LED having a peak wavelength at 350 - 420 nm.

Specifically, an irradiation of an actinic energy is employed by composing light sources on the both side of a head unit containing ink ejection mechanism and scanning this head unit and light sources via so called scan method. An actinic energy is irradiated at constant time after ink landing (preferably 0.005 to 10 second/cm$^2$, more preferably 0.01 to 0.5 second/cm$^2$. Thus, by controlling time between landing and irradiation in extreme short time, it can achieve to prevent from bleed an ink composition deposited on the recording medium before curing step or to prevent from decrease of curing sensitivity due to mix a movable component in a substrate (for example, plasticizer in a vinyl chloride sheet) into an ink. Moreover, in view of enhancing curing, preferred is to repeat an actinic energy radiation after ejecting each color ink, resulting in high productivity, while an actinic energy can be irradiated all together at once after ejecting from all color heads.

The inkjet recording apparatus of a serial scan method and the method for forming image utilizing above ink in which light source is arranged between heads and radiation is exposed after depositing each one color will now specifically be described below with reference to the accompanying drawings, however the present invention is not limited thereto.

The inkjet recording apparatus of serial scan method and the method for forming image utilizing above ink related to the present embodiment will now specifically be described with reference to the accompanying drawings.

FIG. 1 is a perspective view showing the constitution of the inkjet recording apparatus of the present embodiment.

As shown in FIG. 1, an inkjet recording apparatus 1 of the embodiment includes a printer main body 3 supported in a support base 2. In the printer main body 3, a platen 4 of a flat plate shape is arranged to support a recording medium S from a nonrecording side. On upstream and downstream sides of a subscanning direction of the platen 4 indicated by an arrow Y shown in figures, convey rollers (not shown) are arranged to convey the recording medium S in the subscanning direction Y. A convey roller is intermittently rotary driven by convey motor (not shown) and recording medium S is conveyed to the subscanning direction Y via repeating stop-and-go in predetermined distance. Hereinafter,

a subscanning direction Y is referred to as a conveyance direction Y.

A guide rail 5 is disposed above the platen 4, and a carriage 6 of a roughly casing shape is supported on the guide rail 5. This carriage 6 is reciprocated in a main scanning direction indicated by an arrow X along the guide rail 5 by a driving mechanism (not shown). On one end side of the platen 4 in the main scanning direction X, an ink tank 7 is installed to store an ink of each color to be ejected from a recording head 10 described below. The ink is supplied from the ink tank 7 through a flexible tube 8 to the recording head 10. On the other end side of the platen 4 in the main scanning direction X, a maintenance unit 9 is installed to clean the recording head 10.

FIG. 2 is a schematic plain view showing the carriage in which at least the recording head and the light radiation device are arranged. FIG. 3 is a schematic cross-sectional view showing the part of carriage including the recording head in FIG. 2.

As shown in a plain view of FIG. 2, a plurality of recording heads 10 which eject ultraviolet curable inks are mounted on the carriage 6, and arranged in parallel in the main scanning direction X. From each recording head 10, inks of process colors for real image such as yellow (Y), magenta (M), cyan (C), and black (K); or a clear ink (CL) or a white ink (W) for a background image are ejected. Inks for real image is not limited to above process color and includes a special color such as orange, violet, gold and silver so long as an ink for forming an real image on the recording medium S. Further, each recording head 10 is arranged as appropriate as well as the case shown in FIG. 2.

Each recording head 10 scans above the recording medium S with ejecting ink in association with the reciprocation of the carriage 6 along the guide rail 5 (refer to FIG. 1) in the main scanning direction. As shown in FIG. 3, a nozzle surface 11 having a plurality of nozzles (not shown) is formed in a bottom surface of each recording head 10. The recording head 10 is arranged so that the nozzle surface 11 penetrates the bottom surface of the carriage 6 so as to face the recording medium S on the platen 4.

As shown in FIG. 2 and 3, a light irradiation device 12 each is arranged between each recording head 10 and outside of the both side terminal recording head 10 in the main scanning direction X. Each light irradiation device 12 includes a light source 13 to emit light onto a deposited ink on the recording medium S. According to the present invention, each light source 13 comprises an LED because that the LED is advantageous in that lighting is instantaneous and a life is long. For example, an actinic radiation having main wavelength at 365 nm emits from LED. Wavelength of LED may be any one of well-known wavelength and appropriately selected in accordance with absorption of an initiator or sensitizer.

In the example shown in FIG. 2, the light irradiation device 12 neighboring to recording head 10 for magenta (M) or cyan (C) and the light irradiation device 12 neighboring to recording head 10 for clear ink (CL) or white ink (W) is explained to arrange as the individual bodies. These may be constituted as one light irradiation device extended to each conveyance direction Y.

A light trap 14 is disposed between each recording head 10 and each light irradiation device 12, which 13 is provided to prevent light emitted from the light source 13 from being reflected on the recording medium S to reach the nozzle surface 11 of the recording head 10. To effectively trap the reflected light, an inner surface 15 is properly processed such as coating of a light absorber for absorbing light on the inner surface 15 of the light trap 14.

In inkjet recording apparatus 1, during image recording, the recording medium S is conveyed to the conveyance direction Y by conveyance roll and set at the predetermined position. Then the carriage 6 starts to move to the main scanning direction X and the recording head 10 starts to scan to the main scanning direction X in association with the movement of the carriage 6. Herein, higher speed recording can be possible by heating platen 4. Heating temperature of the platen defers from a material or thickness of a base material, and is preferably set at 30 to 50 ˚C.

As a recording material utilizable in an image forming method of this invention, various types of non-absorptive plastic and film thereof, which are utilized for so-called soft packaging, in addition to ordinary non-coated paper and coated paper, can be utilized; and various types of plastic film includes such as polyethylene terephthalate (PET) film, oriented polystyrene (OPS) film, oriented polypropylene (OPP) film, oriented nylon (ONy) film, poly vinyl chloride (PVC) film, polyethylene (PE) film and triacetyl cellulose (TAC) film. As other plastic film, polycarbonate, acrylic resin, polyacetal, PVA and rubbers can be utilized. Further, metals and glasses are applicable.

During scanning of the recording head 10 to the main scanning direction X, an ink such as the ink for the real image or the ink for the background image in the inkjet ink set is properly ejected from the nozzle of the recording head 10, and ultraviolet light is irradiated onto the ink deposited on the recording medium S by the light source 13 of the light radiation apparatus 12 in association with the movement of the carriage 6 to cure the ink on the recording medium S.

Subsequently, upon an end of one-direction moving or reciprocating of the carriage 6 in the main scanning direction X, the recording medium S is conveyed by a predetermined amount in the subscanning direction Y and stopped. Then the recording head 10 scans in a reverse direction of the main scanning direction X to record data, ink is ejected, and cured by irradiation of ultraviolet light. Accordingly, repeating of the scanning of the recording head 10 and the intermittent conveying and stop of the recording medium S are associated with each other to record a real image and background image in the recording medium S.

When an exposure amount of actinic radiation (actinic energy radiation) is arranged so that a surface free

energy $\gamma_s$ of an ink layer cured by an actinic radiation is in the range of 30 to 50 mJ/m$^2$ and a polar component $\gamma_s^p$ is in the range of 5 to 15 mJ/m$^2$; highly glossy image can be formed. Herein, a gloss value of 60 degree of an image of 90% printing ratio is preferably 50 or more and 100 or less based on JIS K 5600.

When an amount of cure ultraviolet light irradiated from a light source 13 is excess, there occurs change of properties on the recording medium itself or bad effect on a worker due to leak ultraviolet ray from the apparatus. Therefore, an exposure amount of actinic radiation (actinic energy radiation) is controlled in order to prevent those problems during an operation of inkjet recording apparatus 1.

## EXAMPLES

Examples will now specifically be described that by no means limit the scope of the present invention.

Components of an actinic radiation curable inkjet ink used in each Example and Comparative example are shown in Table 1. Pigment was prepared as a concentrated dispersion in combination with pigment dispersant and appropriate amount of oxetane (OXT221) and added to the ink composition. Excessively added OXT221 was preliminary reduced in order to keep a compound ratio of polymerizable compounds after preparing final ink as shown in Table 1.

Table 1-1

| Component | | Inv.1 | | | | Inv.2 | | | |
|---|---|---|---|---|---|---|---|---|---|
| | | Y1 | M1 | C1 | K1 | Y2 | M2 | C2 | K2 |
| Pigment | Pigmentyellow150 (Yellowpigment) | 3.4 | | | | 3.4 | | | |
| | Pigmentred122 Magentapigment) | | 4.1 | | | | 4.1 | | |
| | Pigmentblue15:4 (Bluepigment) | | | 2.5 | | | | 2.5 | |
| | Pigmentblack7 (Blackpigment) | | | | 2.5 | | | | 2.5 |
| Pigment dispersant Pigment dispersant | AJISPERPB822*1 | | 1.6 | | | | 1.6 | | |
| | AJISPERPB824*1 | 1.20 | | 1.00 | 0.90 | 1.20 | | 1.00 | 0.90 |
| Oxetane compound | OXT211*2 | 29.36 | 3826 | 40.46 | 40.52 | 37.36 | 46.26 | 42.46 | 48.52 |
| | OXT212*2 | 15.0 | 15.0 | 15.0 | 15.0 | | 10.0 | | |

(continued)

| Component | | Inv.1 | | | | Inv.2 | | | |
|---|---|---|---|---|---|---|---|---|---|
| | | Y1 | M1 | C1 | K1 | Y2 | M2 | C2 | K2 |
| Alicyclic epoxy compound | CELOXIDE2021P*3 (Molecularweight: 252) | 10.0 | 10.0 | 10.0 | 10.0 | 10.0 | 10.0 | 5.0 | |
| | EP-I (Molecularweight: 380) | | | | | 10.0 | 10.0 | 5.0 | 20.0 |
| | EP-3 (Molecularweight: 435) | | | | | | | | |
| | EP-7 (Molecularweight: 352) | | | | | | | | |
| | CELLOXIDE2000*3 (Molecularweight: 124) | | | | | | | | |
| | CELOXIDE3000*3 (Molecularweight: 168) | 20.0 | 20.0 | 20.0 | 20.0 | 5.0 | 5.0 | 10.0 | 5.0 |
| | CYCLOMERM100*3 (Molecularweight: 196) | | | | | | | | |
| *1:AjinomotoFine-TechnoCo.,Inc.,*2:ToagoseiCo.,Ltd.,*3:DicelChemicalIndustries,Ltd. Inv.:Inventive example | | | | | | | | | |

Tablel-2

| Component | | Inv.1 | | | | Inv.2 | | | |
|---|---|---|---|---|---|---|---|---|---|
| | | Y1 | M1 | C1 | K1 | Y2 | M2 | C2 | K2 |
| Epoxy compound | EX-211*4 | | | | | | | 10.0 | |
| | E4030*5 | | | | | 10.0 | | 15.0 | 10.0 |
| Photo acid generator | CPI-100*6 | 8.0 | 8.0 | 8.0 | 8.0 | | | | |
| | (50%solutionofpropylenecarbonate) SPG (50%solutionofpropylenecarbonate) | | | | | 8.0 | 8.0 | 4.0 | 8.0 |
| Sensitizer | | 2.0 | 2.0 | 2.0 | 2.0 | | | | |
| | DEA*7 TA-9 | | | | | 4.0 | 4.0 | 4.0 | 4.0 |
| Auxiliary for sensitizer | IRGANOX1076*8 | 1.0 | 1.0 | 1.0 | 1.0 | 1.0 | 1.0 | 1.0 | 1.0 |
| Weather resistance enhancer | KBM-403*9 | 10.0 | | | | 10.0 | | | |
| | KF351*10 | 0.04 | 0.04 | 0.04 | 0.04 | 0.04 | 0.04 | 0.04 | 0.04 |
| Surfactant | X-22-4272*10 | | | | | | | | |
| Polymerization inhibitor | N-ethyldiethanolamine | | | | 0.04 | | | | 0.04 |

*4:(NagaseChemteXCorporation,*5:NewJapanChemicalco.,Ltd.,*6:SAN-APROLtd.,*7:KAWASAKIKASEICHEMICALSLtd.,*8:CibaJapan,*9:Shin-EtsuSilicones,*10:Shin-EtsuChemiclCo.,Ltd.
Inv.:Inventive example,Comp.

Tablel-3

| Component | | Inv.3 | Inv.4 | Inv.5 | Inv.6 | Comp.1 | Comp.2 |
|---|---|---|---|---|---|---|---|
| | | M3 | M4 | M5 | M6 | M7 | M8 |
| Pigment | Pigmentyellow150 (Yellowpigment) | | | | | | |
| | Pigmentred122 (Magentapigment) | 4.1 | 4.1 | 4.1 | 4.1 | 4.1 | 4.1 |
| | Pigmentblue15:4 (Bluepigment) | | | | | | |
| | Pigmentblack7 (Blackpigment) | | | | | | |
| Pigment dispersant | AJISPERPB822*1 | 1.6 | 1.6 | 1.6 | 1.6 | 1.6 | 1.6 |
| | AJISPERPB824*1 | | | | | | |
| Oxetane compound | OXT211*2 | 43.26 | 38.26 | 38.26 | 48.26 | 38.26 | 47.10 |
| | OXT212*2 | 15.0 | 15.0 | 15.0 | 15.0 | 15.0 | 15.0 |
| Alicyclic epoxy compound | CELOXIDE2021P*3 (Molecularweight:252) | 10.0 | 10.0 | 5.0 | | | |
| | EP-1 (Molecularweight: 380) | | | | | | 21.0 |
| | EP-3(Molecularweight: 435) | | | 5.0 | | | |
| | EP-7(Molecularweight: 352) | | | | 10.0 | | |
| | CELOXDE2000*3 (Molecularweight:124) | 15.0 | | | 10.0 | | |
| | CELOXIDE3000*3 (Molecularweight:168) | | | | | 20.0 | |
| | CYCLOMERM100*3 (Molecularweight:196) | | 20.0 | 20.0 | | | |
| *1:AjinomotoFine-TechnoCo.,Inc.,*2:ToagoseiCo.,Ltd.,*3:DicelChemicalIndustries,Ltd.<br>Inv.:Inventive example :Comparative example | | | | | | | |

Tablel-4

| Component | | Inv.3 | Inv.4 | Inv.5 | Inv.6 | Comp.1 | Comp.2 |
|---|---|---|---|---|---|---|---|
| | | M3 | M4 | M5 | M6 | M7 | M8 |
| Epoxy compound | X-211**4 | | | | | | |
| | E4030*5 | | | | | 10.0 | |
| Photo acid generator | CPI-100*6 (50%solutionofpropylenecarbonate) | 8.0 | 8.0 | 8.0 | 8.0 | 8.0 | 8.0 |
| | SPG (50%solutionofpropylenecarbonate) | | | | | | |
| Sensitizer | DEA*7 | 2.0 | 2.0 | 2.0 | 2.0 | 2.0 | 2.0 |
| | TA-9 | | | | | | |

(continued)

| Component | | Inv.3 | Inv.4 | Inv.5 | Inv.6 | Comp.1 | Comp.2 |
|---|---|---|---|---|---|---|---|
| | | M3 | M4 | M5 | M6 | M7 | M8 |
| Auxiliary for sensitizer | IRGANOX1076*8 | 1.0 | 1.0 | 1.0 | 1.0 | 1.0 | 1.0 |
| Weather resistance enhancer | KBM-403*9 | | | | | | |
| | KF351*10 | 0.04 | 0.04 | 0.04 | 0.04 | 0.04 | |
| Surfactant | X-22-4272*10 | | | | | | 0.2 |
| Polymerization inhibitor | N-ethyldiethanolamine | | | | | | |
| *4: (NagaseChemteXCorporation, *5: NewJapanChemicalco., Ltd., *6: SAN- APROLtd., *7: KAWASAKIKASEICHEMCALSLtd.,*8:CibaJapan,*9:Shm-EtsuSilicones,*10:Shin-EtsuChemicalCo.,Ltd. inv.:Inventive example, Comp.:Comparative example | | | | | | | |

SPG

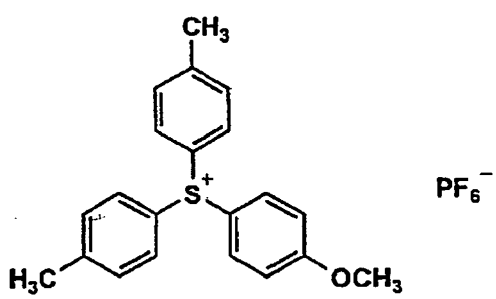

TA-9

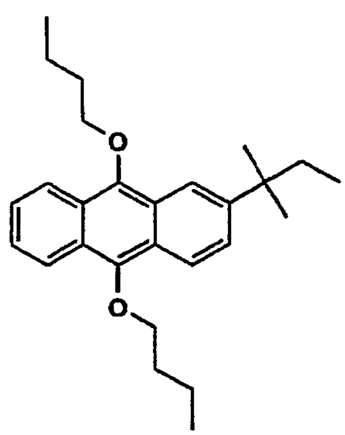

Measurement of Surface Tension of Ink

Static surface tension (mN/m) of the ink prepared above was evaluated via surface tension meter (produced by Kyowa Interface Science Co., Ltd.: CBVP-Z) using platinum plate method at 25 ˚C.

<Inkjet Image forming method>

Image forming as described below was continuously performed onto a vinyl chloride sheet by using an inkjet recording apparatus illustrated in FIG. 1 which installed piezo type inkjet nozzle and charged with each ink prepared as above. Heads for yellow, magenta, cyan and black ink are installed Light sources were not installed between heads but installed only on the outside of heads at both edges. Ink supply system comprises an ink tank, a supply pipe, a front ink tank just before head, a pipe with filter and a piezo head and heated at 50 ˚C by heat insulation from a front ink tank to head. Each ink was continuously ejected by driving piezo head so as to eject 4 pl size dot in resolution of 1440 x 1440 dpi. Carriage speed was 600 mm/sec. After landing each ink, each ink was cured instantaneously (less than 0.1 second after deposition, irradiation time 0.017 seconds/$cm^2$) via lamp units installed both side of a carriage. LED lamp (365 nm, 2,000 mW/$cm^2$) was used as a light source. Platen was heated at 45 ˚C. Inkjet image was formed under an ambient at 25 ˚C and 50% RH. according to the method above.

(Inkjet Image forming method 1).

A test chart is used as a print image which comprises a wedge image of yellow, magenta, cyan and black.
Measurement of surface free energy $\gamma_s$ and a polar component $\gamma_s^p$ of cured ink layer:

Contact angle against to pure water, propylene carbonate and n-nonane of obtained yellow, magenta, cyan and black print image surface by printing ratio pattern 100% were evaluated by Automatic dynamic contact angle meter DCA-VZ type manufactured by Kyowa Interface Science Co., Ltd.. Then, surface free energy was divided into three components such as a non-polar component, a polar component and a hydrogen bond component via Surface free energy analyzing system EG-25 and a surface free energy $\gamma_s$ and a polar component $\gamma_s^p$ were obtained.

Gloss:

A gloss value of 60 degree of an obtained image of 100% printing ratio was evaluated via handy gloss meter IG-310 produced by HORIBA Seisakusho. Gloss G was evaluated based on the following criteria.

◎:$65 \leq G$
○:$50 \leq G < 65$
△:$35 \leq G < 50$
×:$G < 35$

Curing rate:

Ink layer of 3 μm was hand coated on a PET (polyethylene terephthalate) substrate via wire bar followed by curing via LED lamp (365 nm, 2,000 mW/$cm^2$) under an ambient at 25 ˚C, 50% R.H. by changing a speed from 100 to 2000 mm in unit of 100 mm/s.
The film surface after curing was finger-touched to confirm the scanning speed in which the presence of surface tackiness disappears and defined as curing rate (mm/s). Curing rate was evaluated based on the following criteria.

◎: 1,500 mm/sec or more to 2,000 mm/sec or less
○: 1,000 mm/sec or more to less than 1,500 mm/sec
△: 500 mm/sec or more to less than 1,000 mm/sec
×: 100 mm/sec or more to less than 500 mm/sec

Flexibility:

Stripe specimen were prepared by cutting obtained yellow, magenta, cyan and black print image of 100% printing ratio together with vinyl chloride sheet into stripe of 12.7 mm width x 70 mm length. After standing stripe specimen 1day at room temperature (25 ˚C), stripe specimen was held at the position of 10 mm from edge of long side followed by stretching at the position of 50 mm from there at the speed of 1 mm/sec. Length A mm in which crack was noted in the image portion was evaluated and stretching ratio was calculated by the equation below. Evaluation was carried out under an ambient at room temperature.

$$\text{Equation: } E\% = (A/50) \times 100$$

Stretching ratio E was evaluated based on the following criteria.

◎: 140% ≤ E
○: 130%≤E<140%
△: 120%≤E<130%
×:E<120%

All evaluation results above were listed in Table 2.

Table 2

| | | Inv.1 | | | | Inv.2 | | | | Inv.3 | Inv.4 | Inv.5 | Inv.6 | Comp.1 | Comp.2 |
|---|---|---|---|---|---|---|---|---|---|---|---|---|---|---|---|
| | | Y1 | M1 | C1 | K1 | Y2 | M2 | C2 | K2 | M3 | M4 | M5 | M6 | M7 | M8 |
| Epoxy ratio | % by mass | 33% | 33% | 33% | 33% | 80% | 80% | 50% | 80% | 40% | 33% | 33% | 50% | 0% | 100% |
| ink Surface tension | mN/m | 33 | 33 | 33 | 33 | 34 | 33 | 34 | 34 | 32 | 31 | 32 | 31 | 31 | 25 |
| Surface energy of cured layer | $\gamma_s$ | 31 | 31 | 31 | 32 | 34 | 33 | 33 | 33 | 32 | 31 | 32 | 31 | 31 | 28 |
| | $\gamma_s^p$ | 5.3 | 5.7 | 5.5 | 8.2 | 6.5 | 6.6 | 5.3 | 6.2 | 5.8 | 6.3 | 6.5 | 7.5 | 3.6 | 2.9 |
| Gloss (60 degree) | | ○ | ◎ | ○ | ◎ | ○ | ○ | ○ | ○ | ○ | ○ | ◎ | ◎ | × | × |
| Curing rate | | ◎ | ○ | ◎ | ○ | ○ | ○ | ○ | ○ | ○ | ○ | ○ | ○ | Δ | ○ |
| Flexibility | | ◎ | ◎ | ◎ | ◎ | ○ | ○ | ○ | ○ | ◎ | ◎ | ◎ | ◎ | ◎ | Δ |
| Inv.: Inventive example, Comp.: Comparative example | | | | | | | | | | | | | | | |

Epoxy ratio: amount of alicyclic epoxy compound having molecular weight of 200 to 1,000 based on total of alicyclic epoxy compound

Next, LED light source of printer shown in FIG. 1 was installed between each head shown in FIG. 2 and image was formed as the same manner as above by using ink of Example 1. LED lamp (365 nm, 500 mW/$cm^2$) is used as a light source. Printing was carried out by carriage speed of 800 mm/sec.

(Inkjet Image forming method 2)

Further, light source was changed to LED lamp having lower output (365 nm, 200 mW/$cm^2$) and printing was carried out by carriage speed of 600 mm/sec. When lower output light source was used, effect of heating platen was large and in the case of without heating, surface energy $\gamma_s^p$ of formed cured image became low, resulting in low gloss image.

(Inkjet Image forming methods 3 and 4)

Next, light source of the printer shown in FIG. 1 was changed to low-pressure mercury lamp (10 mW/$cm^2$) and printing was carried out by carriage speed of 400 mm/sec.

(Inkjet Image forming method 5)

Surface energy and gloss of magenta output image obtained by each printer described above were shown in Table 3.

Table 3

| Image forming method | Light source | Illuminance mW/$cm^2$ | Carriage speed mm/sec | Platen heating | Surface energy of cured layer | | Gloss (60 degree) | Flexibility |
|---|---|---|---|---|---|---|---|---|
| | | | | | $\gamma_s$ | $\gamma_s^p$ | | |
| 1 | LED lamp | 2,000 | 600 | Done | 31 | 5.7 | ◎ | ◎ |
| 2 | LED lamp | 500 | 800 | Done | 32 | 6.3 | ◎ | ◎ |
| 3 | LED lamp | 200 | 400 | Done | 31 | 5.2 | ○ | ◎ |
| 4 | LED lamp | 200 | 400 | None | 31 | 4.8 | Δ | ◎ |
| 5 | low-pressure mercury lamp | 10 | 400 | Done | 31 | 3.1 | × | ◎ |

As can clearly seen from Tables 1 to 3, a surface tension of an ink and a surface free energy of a cured layer according to the present invention can be controlled in a proper range and results in excellent gloss of printed image. Therefore the present invention can provide an actinic radiation curable inkjet ink which results in excellent ejection and high sensitivity, and is capable of forming high glossy and flexible images, and an image forming method utilizing the same.

## Claims

**1.** An image forming method comprising steps of

ejecting an actinic radiation curable inkjet ink comprising a photo polymerization initiator and a polymerizable monomer, wherein a surface tension of the ink is in the range of 30 to 50 mN/m onto a recording medium by an inkjet method and after the ejecting,

irradiating an actinic radiation from a light source to cure the ink; wherein the actinic radiation is radiated so as

to have a surface free energy $\gamma_s$ of the cured ink layer being in the range of 30 to 50 mJ/m$^2$ and a polar component $\gamma_s^p$ being in the range of 5 to 15 mJ/m$^2$, wherein $\gamma_s^d$, $\gamma_s^p$ and $\gamma_s^h$ each represent a non-polar component, a polar component and a hydrogen bond component of a surface free energy of a solid surface based on Young-Fowkes Equation, provided that the surface free energy is represented by $\gamma_s=\gamma_s^d+\gamma_s^p+\gamma_s^h$.

**2.** The image forming method of claim 1, wherein image forming is performed by a serial scan method.

**3.** The image forming method of claim 1 or 2, wherein the light source is an LED light source.

**4.** The image forming method of any one of claims 1 to 3, wherein a degree of stretching of the cured ink layer which is formed by a printing rate of 100% on a vinyl chloride substrate is 130% or more.

**5.** The image forming method of any one of claims 1 to 4, wherein the recording medium is heated at a predetermined temperature during irradiating the actinic radiation.

**6.** The image forming method of any one of claims 1 to 5, wherein actinic radiation is irradiated in the range of 100 to 4,000 mW/cm$^2$ and 0.005 to 10 second/cm$^2$ of an illuminance at an exposed surface after the ejecting on the recording medium.

**7.** The image forming method of any one of claims 1 to 5, wherein the actinic radiation curable inkjet ink comprises an alicyclic epoxy compound having a molecular weight of less than 200 and an alicyclic epoxy compound having a molecular weight in the range of 200 to 1,000 as the polymerizable monomer.

**8.** The image forming method of any one of claim 6, wherein a content of the alicyclic epoxy compound having a molecular weight in the range of 200 to 1,000 is 20 to 50 % by mass based on the total ink and a content of the alicyclic epoxy compound having a molecular weight of less than 200 is 1 to 30% by mass.

**9.** The image forming method of any one of claims 1 to 8, wherein the actinic radiation curable inkjet ink comprises a pigment, and wherein the photo polymerization initiator is an acid generator.

**10.** A printed matter in which an image is formed by ejecting an actinic radiation curable inkjet ink comprising a photo polymerization initiator and a polymerizable monomer, wherein a surface tension of the ink is in the range of 30 to 50 mN/m onto a recording medium by an inkjet method and after the ejecting,
irradiating an actinic radiation from a light source to cure the ink; wherein a surface free energy $\gamma_s$ of the cured ink layer is in the range of 30 to 50 mJ/m$^2$ and a polar component $\gamma_s^p$ is in the range of 5 to 15 mJ/m$^2$, and
wherein a degree of stretching of the cured ink layer which is formed by a printing rate of 100% on a vinyl chloride substrate is 130% or more.

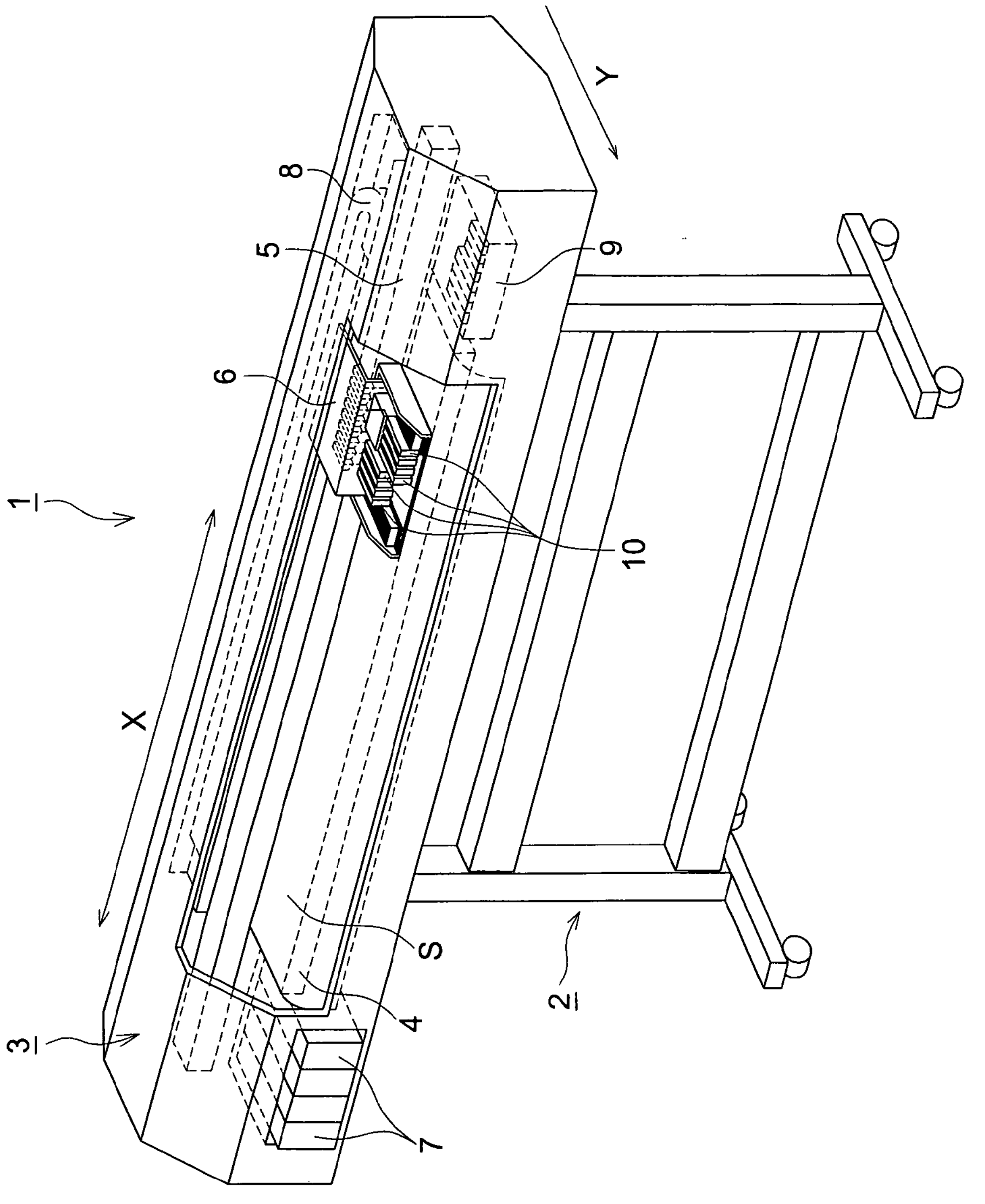


FIG. 1

FIG. 2

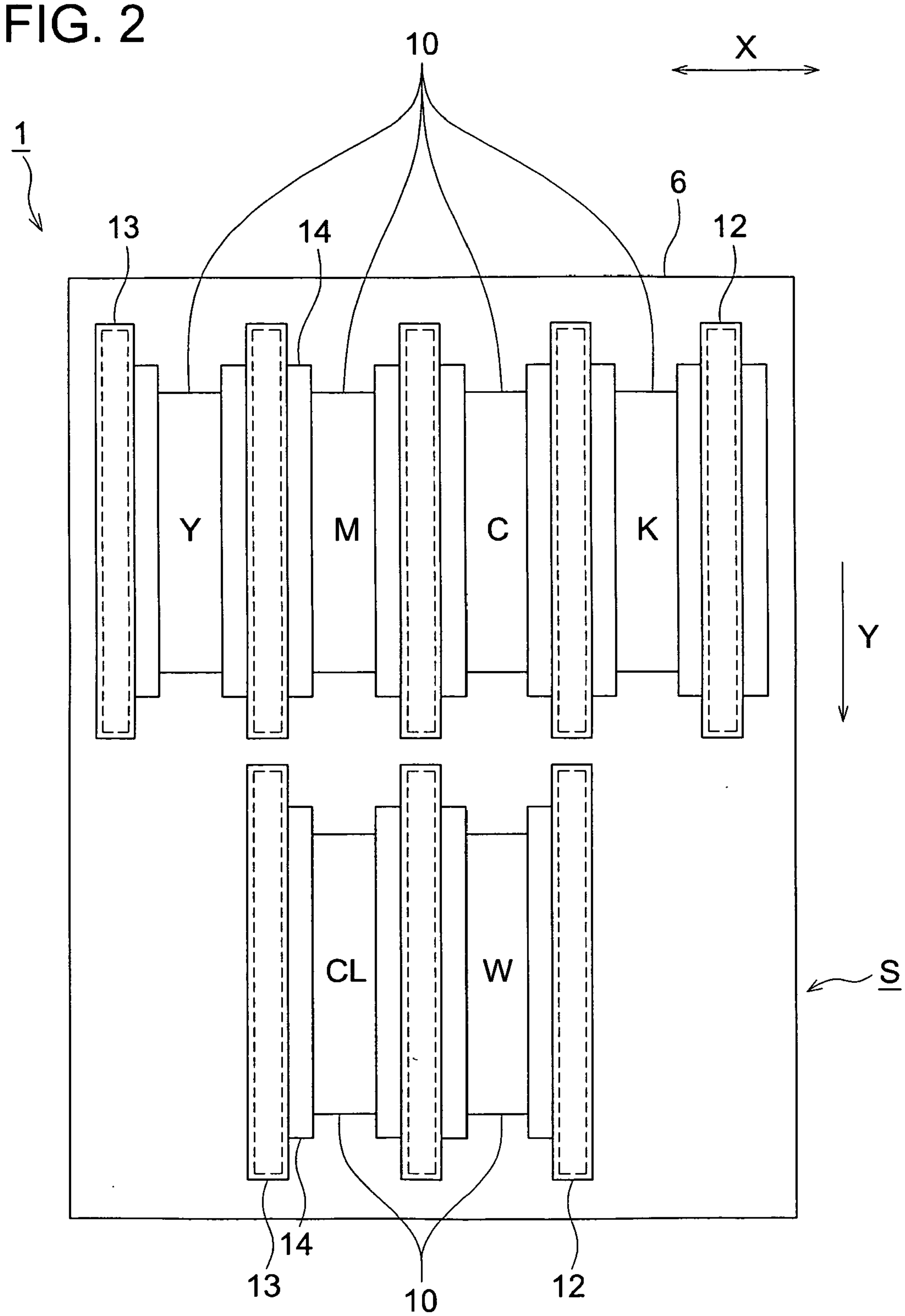

FIG. 3

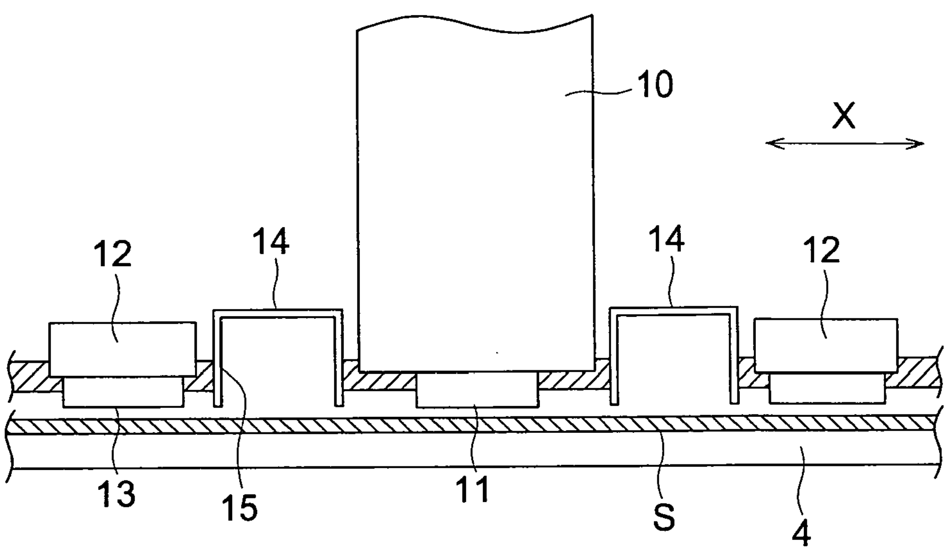

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000504778 W
- JP 2002188025 A
- JP 2002144553 A
- WO 1999029787 A
- EP 568993 A
- US 4508811 A
- US 5227227 A
- JP 2001125255 A
- JP 11271969 A
- JP 2008255291 A
- JP 2008088132 A
- JP 2008169156 A
- JP 2001220526 A
- JP 2001310937 A

### Non-patent literature cited in the description

- Imaging Yo Yuki Zairyo. Bunshin Shuppan, 1993, 187-192